# EUROPÄISCHE PATENTSCHRIFT

(11) **EP 1 500 535 B1**
(45) Veröffentlichungstag und Bekanntmachung des Hinweises auf die Patenterteilung: **07.11.2007**
(21) Anmeldenummer: 04016155.6
(22) Anmeldetag: 09.07.2004
(51) Int. Cl.: B60H 1/32

(54) **Vorrichtung und Verfahren zur Standklimatisierung eines Fahrzeugs**
Device and method for vehicle air conditioning during vehicle stop
Appareil et procédé de climatisation d'un véhicule à l'arrêt

(30) Priorität: 23.07.2003 DE 10333734
(43) Veröffentlichungstag der Anmeldung: 26.01.2005
(73) Patentinhaber: Behr GmbH & Co. KG, 70469 Stuttgart (DE)
(72) Erfinder: Baruschke, Wilhelm, Dipl.-Ing., 73117 Wangen (DE); Britsch-Laudwein, Armin, 71272 Renningen (DE); Bureau, Cathy, Dipl.-Ing., 48009 Birmingham MI (US); Lochmahr, Karl, Dipl.-Ing. (FH), 71665 Vaihingen (DE); Morgenstern, Stefan, Dipl.-Ing. (FH), 70499 Stuttgart (DE)

(56) Entgegenhaltungen:
- DE-A- 4 414 547
- DE-A- 10 036 793
- DE-A- 10 218 081
- DE-A- 19 800 004
- DE-A- 19 927 518
- US-A- 4 878 359

## Beschreibung

Die Erfindung betrifft eine Vorrichtung zur Klimatisierung eines Fahrzeugs nach dem Oberbegriff des Anspruchs 1 und ein Verfahren zur Klimatisierung eines Fahrzeugs nach dem Oberbegriff des Anspruchs 9.

Aus dem Bau von Klimaanlagen für Fahrzeuge ist bekannt, eine Verdichtereinheit vorzusehen, die mechanisch mit einem Hauptmotor des Fahrzeugs koppelbar ist. Der Hauptmotor eines Fahrzeugs, bei dem es sich um eine Wärmekraftmaschine oder auch um einen gegebenenfalls durch Brennstoffzellen versorgten Elektromotor handeln kann, wird im allgemeinen über einen großen Drehzahl- und Leistungsbereich betrieben. Dabei tritt das Problem auf, dass der mechanisch mit dem Hauptmotor gekoppelte Verdichter einer Klimaanlage nicht über den gesamten Drehzahlbereich optimal arbeitet. Insbesondere im Zustand einer Leerlaufdrehzahl oder unteren Drehzahl des Hauptmotors liegt daher häufig keine ausreichende Kühlleistung der Klimaanlage vor. Dieses Problem wird noch dadurch vergrößert, dass gerade bei Stillstand des Fahrzeugs bei laufendem Hauptmotor eine besonders große Aufheizung des Innenraums des Fahrzeugs durch Abwärme des Hauptmotors stattfindet.

Die deutsche Patentanmeldung DE 103 23 813.1 der Anmelderin offenbart eine Vorrichtung und ein Verfahren zur Klimatisierung eines Fahrzeugs im Stillstand.

In der DE 102 18 081 A1 wird eine Kraftfahrzeug-Klimaanlage beschrieben, deren Kältemittelkreislauf zwei parallel geschaltete Verdichter aufweist. Der eine Verdichter ist mit dem Verbrennungsmotor des Kraftfahrzeugs gekoppelt, während der zweite, Zusatzverdichter durch einen Elektromotor betrieben wird, welcher von der Fahrzeugbatterie und/oder dem vom Verbrennungsmotor angetriebenen Generator mit elektrischer Energie versorgt wird.

In der DE 100 36 793 A1 wird als nächster Stand der Technik eine Kraftfahrzeug-Klimaanlage beschrieben, bei der der Kältemittelkreislauf ebenfalls zwei parallel angeordnete Kompressoren aufweist, wobei ein Kompressor direkt vom Verbrennungsmotor angetrieben wird und der weitere Kompressor von einem Elektromotor angetrieben wird, der seine Energie von einem mit dem Motor gekoppelten Generator bezieht. Der elektrisch betriebene Zusatz-Kompressor wird insbesondere bei Leerlaufdrehzahl des Verbrennungsmotors zugeschaltet, um die Kälteleistung der Klimaanlage zu erhöhen.

In der DE 44 14 547 A1 wird eine Fahrzeug-Standklimaanlage beschrieben, bei der der Kältemittelkreislauf ebenfalls einen Hauptverdichter, welcher mit dem Fahrzeugmotor gekoppelt ist, und einen zum ersten Verdichter parallel geschalteten zweiten Verdichter, der von einem Elektromotor betrieben wird, aufweist. Der Elektromotor bezieht seine elektrische Energie ausschließlich aus gesonderten Fahrzeugzusatzbatterien und, insbesondere bei längeren Standphasen, aus dem stationären Stromnetz.

Es ist die Aufgabe der Erfindung, eine eingangs genannte Vorrichtung und ein eingangs genanntes Verfahren so zu verbessern, dass eine Klimatisierung des Fahrzeugs bei Stillstand eines Hauptmotors oder bei niedriger Drehzahl eines Hauptmotors besonders einfach ermöglicht ist.

Diese Aufgabe wird für eine eingangs genannte Vorrichtung erfindungsgemäß mit den kennzeichnenden Merkmalen des Anspruchs 1 gelöst.

Vorteilhaft kann dabei durch eine Aktivierung des zweiten Verdichters eine Unterstützung des ersten Verdichters erfolgen, wenn der erste Verdichter nur mit geringer Leistung betrieben werden kann. Dies ist insbesondere dann der Fall, wenn sich der Hauptmotor des Fahrzeugs im Leerlauf oder allgemein in einem Zustand geringer Drehzahl befindet.

Der zweite Verdichter ist in einem Kältemittelkreislauf parallel zu dem ersten Verdichter angeordnet, so dass auf einfache Weise ein Zuschalten oder Abschalten des zweiten Verdichters ermöglicht ist. Zweckmäßigerweise stellt der zweite Verdichter im abgeschalteten Zustand zugleich eine Sperre für das Kältemittel dar. Alternativ kann aber vor oder hinter dem zweiten Verdichter ein Absperrventil vorgesehen sein, welches einen dem zweiten Verdichter zugeordneten Zweig des Kältemittelkreislaufs sperrt.

Der erste Verdichter ist mittels einer mechanischen Kopplung durch einen Hauptmotor des Fahrzeugs antreibbar. Die Kopplung kann dabei auf an sich bekannte Weise ausgeführt sein, wobei eine Leistungssteuerung bzw. eine Aktivierung oder Deaktivierung auf bekannte Weise durch eine Ansteuerung der Kopplung erfolgt.

Der zweite Verdichter ist mittels eines Elektromotors antreibbar, wodurch auf einfache Weise ein steuerbarer Antrieb des zweiten Verdichters gegeben ist. Dabei ist der zweite Verdichter mit einer Hauptbatterie des Fahrzeugs elektrisch verbindbar, wodurch kostengünstig eine bereits vorhandene Energiequelle des Fahrzeugs zum Antrieb des zweiten Verdichters genutzt werden kann.

Dabei ist der zweite Verdichter alternativ oder auch zusätzlich mit einer weiteren Energiespeichereinrichtung verbindbar. Hierdurch kann der zweite Verdichter teilweise oder sogar vollständig von einer Energiequelle angetrieben werden, die nicht oder zumindest zeitweise nicht von dem Hauptmotor des Fahrzeugs abhängig ist.

Bevorzugt kann die Energiespeichereinrichtung eine besondere Zyklenspeicherbatterie sein, die eine große Anzahl von Lade- und Entnahmezyklen, auch Tiefentladungen bei hoher Leistung zulässt. Es ist jedoch vorteilhaft, die Zyklenspeicherbatterie bei Betrieb des zweiten Verdichters beispielsweise bis etwa 70% ihres maximalen Ladezustandes zu entladen, d.h. im Regelfall Tiefentladungen zu vermeiden.

Bevorzugt kann die Energiespeichereinrichtung auch ein Hochleistungskondensator sein, wie er etwa als Doppelschichtkondensator oder "Supercap" bekannt ist. Eine solche Energiespeichereinrichtung ist zwar mit vergleichsweise hohen Kosten verbunden, korrespondiert aber auf besonders gute Weise mit den vorliegenden Anforderungen an hohe, kurzzeitige Leistungsabgabe bei besonders schnellem und verlustfreiem Ladevorgäng.

Weiterhin kann als Energiequelle vorteilhaft eine Brennstoffzelle vorgesehen sein, wodurch eine besonders große Menge an Energie für den zweiten Verdichter zur Verfügung steht.

In einer besonders bevorzugten Ausgestaltung der Vorrichtung ist die Energiespeichereinrichtung mit einem Solarzellenelement verbindbar. Auf diese Weise ist die Energiespeichereinrichtung durch eine externe und vom Hauptmotor des Fahrzeugs vollkommen unabhängige Quelle wieder aufladbar. Insbesondere wird hierdurch eine Klimatisierung des Fahrzeugs bei Stillstand des Hauptmotors ermöglicht, ohne die Hauptbatterie des Fahrzeugs zu belasten. Solarzellen sind zudem besonders geeignet, da eine Klimatisierung insbesondere dann angefordert wird, wenn ein starker Sonneneinfall besteht.

Vorteilhaft kann die Energiespeichereinrichtung mit einem von einem Hauptmotor des Fahrzeugs antreibbaren elektrischen Generator verbindbar sein, so dass zumindest bei laufendem Hauptmotor eine besonders schnelle Aufladung der Energiespeichereinrichtung ermöglicht ist.

In einer besonders bevorzugten Ausgestaltung der Vorrichtung ist ein Steuergerät zur Ansteuerung zumindest des ersten Verdichterelements und/oder des zweiten Verdichterelements vorgesehen, wobei zumindest eine messbare Regelgröße und zumindest ein vorbestimmbarer Sollwert durch das Steuergerät abrufbar sind. Hierdurch ist eine je nach Betriebsbedingung optimierte Ansteuerung der Vorrichtung zur Klimatisierung des Fahrzeugs ermöglicht. Die zumindest eine messbare Regelgröße ist bevorzugt die Temperatur des Verdampferelements, die mittels eines Temperatursensors im Bereich des Verdampferelements messbar ist, beispielsweise Lufttemperatur nach Verdampfer, und der vorbestimmbare Sollwert ist bevorzugt eine Solltemperatur des Verdampfers. Hierdurch ist der Wirkungsweise der Vorrichtung besonders einfach steuerbar und optimierbar.

Die Aufgabe der Erfindung wird für ein eingangs genanntes Verfahren erfindungsgemäß mit den kennzeichnenden Merkmalen des Anspruchs 9 gelöst.

Durch die Verwendung eines Satzes von Kenngrößen als Bedingung für die Aktivierung des ersten Verdichters und/oder des zweiten Verdichters wird eine besonders große Flexibilität bei der Klimatisierung eines Fahrzeugs unter allen denkbaren Bedingungen erreicht.

Bevorzugt umfasst der Satz von Kenngrößen ein Signal über den Zustand eines Hauptmotors des Fahrzeugs. Dabei ist der zweite Verdichter bevorzugt in einem ausgeschalteten Zustand des Hauptmotors aktiviert und/oder dann aktiviert, wenn eine Drehzahl des Hauptmotors unterhalb eines Drehzahlschwellwertes liegt. Hierdurch wird vorteilhaft erreicht, dass das Fahrzeug im Stillstand klimatisierbar ist und/oder dass die Klimatisierung des Fahrzeugs in einem Zustand mit niedriger Drehzahl des Hauptmotors verbessert ist.

Bevorzugt ist der zweite Verdichter nur dann aktivierbar, wenn der Ladezustand einer dem zweiten Verdichter zugeordneten Energiespeichereinrichtung oberhalb eines Ladeschwellwertes liegt. Hierdurch ist auf einfache Weise verhindert, dass der zweite Verdichter anläuft, ohne dass eine für eine Klimatisierung ausreichende Energiemenge zur Verfügung steht.

Besonders bevorzugt erfolgt eine Aktivierung des ersten Verdichters und/oder des zweiten Verdichters in Abhängigkeit eines Vergleichs eines Verdampfertemperatur-Sollwerts mit einem Messwert der Verdampfertemperatur.

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel einer erfindungsgemäßen Vorrichtung und eines erfindungsgemäßen Verfahrens anhand einer Zeichnung näher erläutert. Darin zeigen:
- Fig. 1: einen schematische Aufbau einer erfindungsgemäßen Vorrichtung zur Klimatisierung eines Fahrzeugs, und
- Fig. 2: einen schematischen Aufbau für ein Steuergerät zur Ansteuerung einer Vorrichtung zur Klimatisierung eines Fahrzeugs.

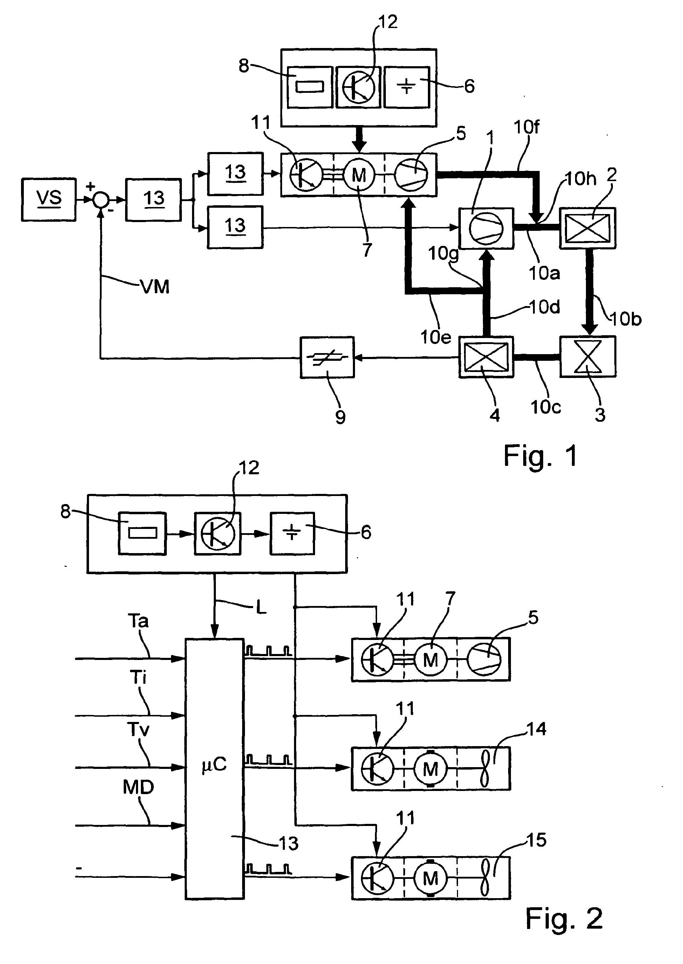

Die erfindungsgemäße Vorrichtung zur Klimatisierung eines Fahrzeugs umfasst gemäß Fig. 1 einen mit einem Kältemittel gefüllten Kreislauf mit Kältemittelleitungen 10a, 10b, 10c, 10d, 10f. In dem Kältemittelkreislauf K befindet sich ein erster Verdichter 1, ein diesem hochdruckseitig und in Fließrichtung des Kältemittels nachgeordnetes, als Wärmetauscher ausgebildetes Kondensatorelement 2, ein diesem in Fließrichtung nachgeordnetes, als Expansionsventil ausgebildetes Expansionselement 3 und ein diesem nachgeordnetes, als Wärmetauscher ausgebildetes Verdampferelement 4.

Das Verdampferelement 4 ist wiederum über die Kältemittelleitung 10d mit dem ersten Verdichter 1 verbunden, wobei sich in dieser Kältemittelleitung 10d ein Abzweig 10g befindet. Von diesem Abzweig 10g führt eine Kältemittelleitung 10e niederdruckseitig zu einem zweiten Verdichter 5. Von der Hochdruckseite des zweiten Verdichters 5 führt eine Kältemittelleitung 10f zu einem Abzweig 10h, der sich in der Kältemittelleitung 10a befindet, die den ersten Verdichter 1 mit dem Kondensator 2 verbindet.

Somit liegt ein geschlossener Kältemittelkreislauf K vor, bei dem der erste Verdichter 1 und der zweite Verdichter 5 parallel zueinander angeordnet sind. Der erste und der zweite Verdichter 1, 5 sind Kältemittelverdichter, die sich in der Art ihres Antriebs unterscheiden. So wird der erste Verdichter 1 herkömmlich motorisch und der zweite Verdichter 5 elektrisch angetrieben.

Der erste Verdichter 1 ist mit einem Hauptmotor des Kraftfahrzeugs (nicht dargestellt) auf bekannte Weise mechanisch verkoppelbar. Dabei ist ein hierfür vorgesehenes Kopplungselement ansteuerbar, insbesondere ein- und auskoppelbar, um den ersten Verdichter 1 zu aktivieren oder zu deaktivieren.

Der zweite Verdichter 5 ist über einen mittels einer Regelschaltung 11 regelbaren Elektromotor 7 antreibbar.

Die Energie zum Antrieb des Elektromotors 7 wird durch eine als Zyklenspeicherbatterie 6 ausgebildete Energiespeichereinrichtung bereitgestellt. Die Zyklenspeicherbatterie 6 ist über ein Solarzellenelement 8 und einen entsprechend angepassten Ladestromregler 12 aufladbar. Das Solarzellenelement 8 ist zweckmäßig beispielsweise auf dem Dach des Fahrzeugs angeordnet.

Im Bereich des Verdampferelements 4 ist ein Verdampfertemperatursensor 9 vorgesehen, durch den die am Verdampferelement 4 anliegende Temperatur VM messbar und in ein elektrisches Signal umwandelbar ist.

Ferner umfasst die Vorrichtung ein Steuergerät 13, das bevorzugt als programmierbarer Prozessrechner ausgebildet ist. Das Steuergerät 13 weist Signalein- und ausgänge auf, wobei eine Vielzahl von Kenngrößen eingangsseitig vorliegt. Diese Kenngrößen können der Messwert einer Größe oder auch ein gegebenenfalls einstellbarer Sollwert sein. Ein Beispiel eines einstellbaren Sollwerts ist die Solltemperatur VS des Verdampferelements 4.

Ausgangsseitige Signale des Steuergeräts 13 sind unter anderem Signale zur Aktivierung oder Deaktivierung des ersten und des zweiten Verdichters 1, 5. Dabei kann insbesondere das Signal zur Aktivierung des zweiten Verdichters 5 nicht nur eine binäre Schaltinformation enthalten, sondern zudem Informationen über die von dem Elektromotor 7 zu erbringende Leistung.

Weitere eingangsseitige Signale des Steuergeräts können ein Ladezustand der Zyklenspeicherbatterie 6, die äußere Lufttemperatur, die Lufttemperatur des Fahrzeuginnenraums, die Drehzahl des Hauptmotors des Fahrzeugs oder ähnliches sein. Auch Informationen über den Kältemitteldruck an verschiedenen Stellen des Kältemittelkreislaufs, die über geeignete Sensoren gemessen werden, können Eingangssignale des Steuergerätes darstellen.

Eine typische Steuerungsablauf durch das Steuergerät 13 besteht darin, dass der gemessene Wert der Verdampfertemperatur VM mit dem Sollwert der Verdampfertemperatur VS verglichen wird. In dem Fall, dass der Messwert VM oberhalb des Sollwerts VS liegt, wird ein Signal zur Aktivierung zumindest eines der beiden Verdichter 1, 5 generiert. Dabei ist es von den Kenngrößen abhängig, ob nur der erste Verdichter 1, nur der zweite Verdichter 5 oder gegebenenfalls beide Verdichter 1, 5 aktiviert werden.

Im Falle des Stillstands des Fahrzeugs mit abgeschaltetem Hauptmotor ist es vorgesehen, dass eine Klimatisierung über den zweiten Verdichter 5 erfolgt. Die Klimatisierung im Falle eines Fahrzeugstillstands erfolgt nach der Strategie, eine übermäßige Aufheizung der Fahrzeugkabine zu verhindern. Auf diese Weise kann ein möglicher Fahrtantritt jederzeit unter komfortablen Bedingungen ermöglicht werden. Insbesondere ist bei einem solchen Betrieb der zweite Verdichter 5 auf eine Energieversorgung durch die solarzellengeladene Zyklenspeicherbatterie 6 angewiesen. Eine typische Betriebsdauer des zweiten Verdichters 6 in diesem Betriebszustand kann etwa 1 bis 3 Minuten sein, bevor der Verdichter 5 wieder abgeschaltet und die Zyklenspeicherbatterie 6 nachgeladen wird.

Im Falle des Stillstands des Fahrzeugs mit eingeschaltetem Hauptmotor ist es vorgesehen, dass der zweite Verdichter 5 dann zugeschaltet wird, wenn die Leistung des ersten Verdichters 1 nicht ausreicht, um die Verdampfertemperatur VM unterhalb ihres Sollwertes VS zu halten.

Insbesondere dann, wenn ein ausreichender Ladezustand der Zyklenspeicherbatterie 6 vorliegt und mäßiger Kälteleistungsbedarf vorherrscht, wird der zweite Verdichter 5 aktiviert und der erste Verdichter 1 deaktiviert, so dass auf diese Weise eine Kraftstoffeinsparung erzielt wird.

Das Fahrzeug kann auch so ausgelegt sein, dass zum Zwecke der Kraftstoffeinsparung der Hauptmotor im Leerlauf automatisch abgeschaltet wird. Für ein derart ausgelegtes Fahrzeug erfolgt die Klimatisierung im so genannten Stop-and-Go-Betrieb wie etwa einem Verkehrsstau oder dichtem Stadtverkehr oder bei einem Ampelhalt im Wechsel über den ersten und den zweiten Verdichter. In einem solchen Fahrzeugbetrieb wird eine Hauptbatterie des Fahrzeugs ständig nachgeladen, so dass für den Fall, dass die Solarzellen keine ausreichende Leistung bereitstellen können, die Hauptbatterie des Fahrzeugs eine weitere nutzbare Energiequelle des zweiten Verdichters 5 darstellt. Eine entsprechende Regelung durch das Steuergerät 13 kann zum Beispiel auf einfache Weise dadurch erfolgen, dass nach einem Abschalten des Hauptmotors immer eine bestimmte Energiemenge und/oder Betriebszeit für den Betrieb des zweiten Verdichters 5 durch die Hauptbatterie zur Verfügung steht, falls die Zyklenspeicherbatterie 6 keinen ausreichenden Ladezustand aufweist.

Insgesamt wird die erfindungsgemäße Vorrichtung somit nach einem Verfahren angesteuert, bei dem ein Satz von Kenngrößen eine Aktivierung des ersten Verdichters 1 und/oder des zweiten Verdichters 5 bestimmt. Je nach Inhalt der Kenngrößen kann es sein, dass keiner der Verdichter 1, 5, nur einer der Verdichter 1, 5 oder beide Verdichter 1, 5 aktiviert sind.

Die Figur 2 zeigt ein Beispiel für ein Steuergerät 13 zur Klimatisierung eines Fahrzeugs anhand eines Satzes von Kenngrößen, wie z.B. von Außen- oder Umgebungstemperatur Ta, Innentemperatur Ti des Fahrzeugs, Verdampfertemperatur Tv, Messdaten MS vom Solarzellenelement 8. Dabei wird anhand des Satzes von Kenngrößen und in Abhängigkeit vom Solarzellenelement 8 und vom Ladezustand L der zugehörigen Zyklenspeicherbatterie 6 zur Verhinderung einer übermäßigen Aufheizung des Fahrzeugsinnenraums, d.h. zur präventiven Vorklimatisierung, mittels des Steuergeräts 13 der vom Elektromotor 7 angetriebene zweite Verdichter 5, ein ebenfalls über einen Elektromotor M angetriebenes Klimagebläse 14 und/oder ein ebenfalls über einen Elektromotor M angetriebener Kondensatorlüfter 15 gesteuert. Eine derartige Stillstandsklimatisierung ist insbesondere dann von Vorteil, wenn der genaue Abfahrtszeitpunkt eines stark solarisierten Fahrzeugs nicht bekannt ist. Eine übermäßige Aufheizung des Fahrzeuginnenraums erfolgt im allgemeinen bei starker Solarisierung und somit bei einer entsprechend geladenen Zyklenspeicherbatterie 6 deren Ladezustand mittels des Steuergeräts 13 überwacht wird. Bei einem hinreichend guten Ladezustand der Zyklenspeicherbatterie 6 kann somit zumindest zeitweise ausschließlich über den elektrisch angetriebenen zweiten Verdichter 5 im Zusammenspiel mit de Klimagebläse 14 und dem Kondensatorlüfter 15 eine Vorklimatisierung bewirkt werden.

## Patentansprüche

1. Vorrichtung zur Klimatisierung eines Fahrzeugs, umfassend einen ersten Verdichter (1), der mittels einer mechanischen Koppelung durch einen Hauptmotor des Fahrzeugs antreibbar ist, ein dem ersten Verdichter (1) nachgeordnetes Kondensatorelement (2), ein dem Kondensatorelement (2) nachgeordnetes Expansionselement (3) und ein dem Expansionselement (3) nachgeordnetes Verdampferelement (4), einen zweiten Verdichter (5), der unabhängig von dem ersten Verdichter (1) ansteuerbar ist und in einem Kältemittelkreislauf parallel zu dem ersten Verdichter (1) angeordnet ist, einen Elektromotor (7) zum Antrieb des zweiten Verdichters (5), wobei der Elektromotor (7) des zweiten Verdichters (5) elektrisch mit einer Hauptbatterie des Fahrzeugs verbindbar ist, **dadurch gekennzeichnet, dass** eine weitere Energiespeichereinrichtung (6) vorgesehen ist, mit der der Elektromotor (7) alternativ oder zusätzlich elektrisch verbindbar ist.

2. Vorrichtung nach Anspruch 1,
**dadurch gekennzeichnet,**
**dass** die Energiespeichereinrichtung (6) eine Zyklenspeicherbatterie ist.

3. Vorrichtung nach Anspruch 1,
**dadurch gekennzeichnet,**
**dass** die Energiespeichereinrichtung (6) ein Hochleistungskondensator ist.

4. Vorrichtung nach Anspruch 1,
**dadurch gekennzeichnet,**
**dass** die Energiespeichereinrichtung (6) eine Brennstoffzelle ist.

5. Vorrichtung nach einem der Ansprüche 1 bis 4,
**dadurch gekennzeichnet,**
**dass** die Energiespeichereinrichtung (6) zur Aufladung mit einem Solarzellenelement (8) verbindbar ist.

6. Vorrichtung nach einem der Ansprüche 1 bis 5,
**dadurch gekennzeichnet,**
**dass** die Energiespeichereinrichtung (6) mit einem von einem Hauptmotor des Fahrzeugs antreibbaren elektrischen Generator verbindbar ist.

7. Vorrichtung nach einem der Ansprüche 1 bis 6,
**dadurch gekennzeichnet,**
**dass** ein automatisches Steuergerät (13) zur Ansteuerung zumindest des ersten Verdichters (1) und/oder des zweiten Verdichters (5) vorgesehen ist, wobei zumindest eine messbare Regelgröße und zumindest ein vorbestimmbarer Sollwert durch das Steuergerät (13) abrufbar sind.

8. Vorrichtung nach Anspruch 7,
**dadurch gekennzeichnet,**
**dass** die zumindest eine messbare Regelgröße eine mittels eines Temperatursensors (9) im Bereich des Verdampferelements gemessene Temperatur ist.

9. Verfahren zur Klimatisierung eines Fahrzeugs mittels einer Vorrichtung nach einem der Ansprüche 1 bis 8, bei dem der erste Verdichter (1) und/oder der zweite Verdichter (5) in Abhängigkeit eines Satzes von Kenngrößen aktiviert werden, **dadurch gekennzeichnet, dass** während eines Stop-and-Go-Betriebes der Elektromotor in Abhängigkeit des Ladezustands der Energiespeichereinrichtung (6) mit der Hauptbatterie des Fahrzeugs und/oder der weiteren Energiespeichereinrichtung (6) verbunden wird.

10. Verfahren nach Anspruch 9,
**dadurch gekennzeichnet,**
**dass** der Satz von Kenngrößen ein Signal über den Zustand eines Hauptmotors des Fahrzeugs umfasst.

11. Verfahren nach Anspruch 10,
**dadurch gekennzeichnet,**
**dass** der zweite Verdichter (5) in einem ausgeschalteten Zustand des Hauptmotors aktiviert ist.

12. Verfahren nach Anspruch 10 oder 11,
**dadurch gekennzeichnet,**
**dass** der zweite Verdichter (5) aktiviert ist, wenn eine Drehzahl des Hauptmotors unterhalb eines Drehzahlschwellwertes liegt oder wenn der Hauptmotor ausgeschaltet ist.

13. Verfahren nach einem der Ansprüche 10 bis 12,
**dadurch gekennzeichnet,**
**dass** der zweite Verdichter (5) deaktiviert ist, wenn eine Drehzahl des Hauptmotors oberhalb eines Drehzahlschwellwertes liegt.

14. Verfahren nach einem der Ansprüche 9 bis 13,
**dadurch gekennzeichnet,**
**dass** der zweite Verdichter (5) nur dann aktivierbar ist, wenn ein Ladezustand einer dem zweiten Verdichter (5) zugeordneten Energiespeichereinrichtung (6) oberhalb eines Ladeschwellwertes liegt.

15. Verfahren nach einem der Ansprüche 9 bis 14,
**dadurch gekennzeichnet,**
**dass** eine Aktivierung des ersten Verdichters (1) und/oder des zweiten Verdichters (5) in Abhängigkeit eines Vergleichs eines Verdampfertemperatur-Sollwerts (VS) mit einem Messwert der Verdampfertemperatur (VM) erfolgt.

16. Verfahren nach einem der Ansprüche 9 bis 15,
**dadurch gekennzeichnet,**
**dass** zyklisch und kurzzeitig eine Standklimatisierung mittels Verdichter (5), Klimagebläse (14) und Kondensatorlüfter (15) dahingehend durchgeführt wird, um eine übermäßige Aufheizung der Fahrzeugkabine zu verhindern.

## Claims

1. A device for air conditioning a vehicle comprising a first compressor (1) which can be driven by a main engine in the vehicle by means of a mechanical coupling, a condenser element (2) positioned downstream of the first compressor (1), an expansion element (3) positioned downstream of the condenser element (2) and an evaporator element (4) positioned downstream of the expansion element (3), a second compressor (5) which can be driven independently of the first compressor (1) and is positioned in a refrigerant circuit parallel to the first compressor (1), and an electric motor (7) for driving the second compressor (5), it being possible to connect the electric motor (7) of the second compressor (5) electrically to a main battery of the vehicle,
**characterised in that**
a further energy storage device (6) is provided to which the electric motor (7) can be connected alternatively or in addition.

2. A device in accordance with claim 1,
**characterised in that**
the energy storage device (6) is a cyclical storage battery.

3. A device in accordance with claim 1,
**characterised in that**
the energy storage device (6) is a high capacity condenser.

4. A device in accordance with claim 1,
**characterised in that**
the energy storage device (6) is a fuel cell.

5. A device in accordance with one of the claims 1 to 4,
**characterised in that**
the energy storage device (6) can be connected to a solar cell element for charging.

6. A device in accordance with one of the claims 1 to 5,
**characterised in that**
the energy storage device (6) can be connected to an electrical generator which can be driven by the main engine of the vehicle.

7. A device in accordance with one of the claims 1 to 5,
**characterised in that**
an automatic control device (13) is provided for triggering at least the first compressor (1) and/or the second compressor (5), it being possible to retrieve at least one measurable controlled variable and at least one predetermined reference value using the control device (13).

8. A device in accordance with claim 7,
**characterised in that**
the at least one measurable controlled variable is a temperature measured by means of a temperature sensor (9) in the area of the evaporator element.

9. A process for air conditioning a vehicle by means of a device in accordance with one of claims 1 to 8 in which the first compressor (1) and/or the second compressor (5) is/are activated dependent on a set of characteristic values,
**characterised in that**
in a stop-and-go mode the electric motor is connected to the main battery of the vehicle and/or to the further energy storage device (6) dependent on the charge status of the energy storage device (6).

10. A process in accordance with claim 9,
**characterised in that**
the set of characteristic values comprises a signal indicating the status of a main engine in the vehicle.

11. A process in accordance with claim 10,
**characterised in that**
the second compressor (5) is activated when the main engine is switched off.

12. A process in accordance with claim 10 or 11,
**characterised in that**
the second compressor (5) is activated when an engine speed of the main engine lies below an engine speed threshold value or when the main engine is switched off.

13. A process in accordance with one of claims 10 to 12,
**characterised in that**
the second compressor (5) is deactivated when an engine speed of the main engine lies below an engine speed threshold value.

14. A process in accordance with one of claims 9 to 13,
**characterised in that**
the second compressor (5) can be activated only if a charge status of an energy storage device (6) allocated to the second compressor lies above a charging threshold value.

15. A process in accordance with one of claims 9 to 14,
**characterised in that**
the first compressor (1) and/or the second compressor (5) is/are activated dependent on a comparison of a reference evaporator temperature value (VS) and a measured evaporator temperature value (VM).

16. A process in accordance with one of claims 9 to 15,
**characterised in that**
a vehicle is air conditioned cyclically and for a short period during vehicle stop by means of a compressor (5), an air conditioning fan (14) and a condenser ventilator (15) in such a manner as to prevent the overheating of the vehicle cabin.

## Revendications

1. Appareil de climatisation d'un véhicule, comprenant un premier compresseur (1) qui peut être entraîné au moyen d'un couplage mécanique par un moteur principal du véhicule, un élément de condensateur (2) disposé à la suite du premier compresseur (1), un élément d'expansion (3) disposé à la suite de l'élément de condensateur (2) et un élément d'évaporation (4) disposé à la suite de l'élément d'expansion (3), un deuxième compresseur (5) qui peut être commandé indépendamment du premier compresseur (1) et est disposé parallèlement au premier compresseur (1) dans un circuit d'agent réfrigérant, un moteur électrique (7) servant à entraîner le deuxième compresseur (5), sachant que le moteur électrique (7) du deuxième compresseur (5) peut être relié électriquement à une batterie principale du véhicule, **caractérisé en ce qu'**un autre dispositif d'accumulation d'énergie (6) est prévu, avec lequel le moteur électrique (7) peut être relié électriquement, en variante ou en plus.

2. Appareil selon la revendication 1, **caractérisé en ce que** le dispositif d'accumulation d'énergie (6) est un accumulateur à cycles.

3. Appareil selon la revendication 1, **caractérisé en ce que** le dispositif d'accumulation d'énergie (6) est un condensateur haute capacité.

4. Appareil selon la revendication 1, **caractérisé en ce que** le dispositif d'accumulation d'énergie (6) est une pile à combustible.

5. Appareil selon l'une des revendications 1 à 4, **caractérisé en ce que** le dispositif d'accumulation d'énergie (6) peut être raccordé à un élément de pile solaire (8) pour le chargement.

6. Appareil selon l'une des revendications 1 à 5, **caractérisé en ce que** le dispositif d'accumulation d'énergie (6) peut être raccordé à un générateur électrique pouvant être entraîné par un moteur principal du véhicule.

7. Appareil selon l'une des revendications 1 à 6, **caractérisé en ce que** un dispositif de commande automatique (13) est prévu pour commander au moins le premier compresseur (1) et/ou le deuxième compresseur (5), sachant qu'au moins une dimension normale mesurable et au moins une valeur nominale pré-déterminable peuvent être données (13) par le dispositif de commande.

8. Appareil selon la revendication 7, **caractérisé en ce qu'**au moins une dimension normale mesurable est une température mesurée au moyen d'un thermostat (9) dans la zone de l'élément de l'évaporateur.

9. Procédé de climatisation d'un véhicule au moyen d'un appareil selon l'une des revendications 1 à 8, dans lequel le premier compresseur (1) et/ou le deuxième compresseur (5) sont activés en fonction d'un jeu de grandeurs caractéristiques, **caractérisé en ce que** pendant un fonctionnement «arrêt-relance» le moteur électrique est relié à la batterie principale du véhicule et/ou l'autre dispositif d'accumulation d'énergie (6) en fonction de l'état de charge du dispositif d'accumulation d'énergie (6).

10. Procédé selon la revendication 9, **caractérisé en ce que** le jeu de grandeurs caractéristiques comporte un signal sur l'état d'un moteur principal du véhicule.

11. Procédé selon la revendication 10, **caractérisé en ce que** le deuxième compresseur (5) est activé lorsque le moteur principal est hors circuit.

12. Procédé selon les revendications 10 ou 11, **caractérisé en ce que** le deuxième compresseur (5) est activé lorsqu'une vitesse de rotation du moteur principal est inférieure à une valeur seuil de vitesse de rotation ou lorsque le moteur principal est hors circuit.

13. Procédé selon l'une des revendications 10 à 12, **caractérisé en ce que** le deuxième compresseur (5) est désactivé, lorsqu'une vitesse de rotation du moteur principal est supérieure à une valeur seuil de vitesse de rotation.

14. Procédé selon l'une des revendications 9 à 13, **caractérisé en ce que** le deuxième compresseur (5) ne peut être activé que lorsqu'un état de charge d'un dispositif d'accumulation d'énergie (6) ajouté au deuxième compresseur (6) se situe au-dessus d'une valeur seuil de charge.

15. Procédé selon l'une des revendications 9 à 14, **caractérisé en ce qu'**une activation du premier compresseur (1) et/ou du deuxième compresseur (5) se produit en fonction d'une comparaison d'une valeur nominale de température du vaporisateur (VS) avec une valeur mesurée de la température du vaporisateur (VM).

16. Procédé selon l'une des revendications 9 à 15, **caractérisé en ce qu'**une climatisation fixe par compresseur (5), ventilateur de climatisation (14) et ventilateur de condensateur (15) est réalisée de manière cyclique et instantanée, pour empêcher une surchauffe de l'habitacle du véhicule.
